# EUROPÄISCHE PATENTSCHRIFT

(11) **EP 1 002 679 B1**
(45) Veröffentlichungstag und Bekanntmachung des Hinweises auf die Patenterteilung: **09.11.2005**
(21) Anmeldenummer: 99250366.4
(22) Anmeldetag: 15.10.1999
(51) Int. Cl.: B60J 1/17, E05F 11/48, E05F 15/00, E05F 15/16

(54) **Vorrichtung zur Gewährleistung einer Relativbewegung zwischen Teilen eines Seilfensterhebers**
Device for assuring a relative movement between parts of a cable window raiser
Dispositif pour assurer un mouvement relatif entre des pièces d'un lève-vitre à câble

(30) Priorität: 17.11.1998 DE 19852977
(43) Veröffentlichungstag der Anmeldung: 24.05.2000
(73) Patentinhaber: Brose Fahrzeugteile GmbH & Co. KG, Coburg, 96450 Coburg (DE)
(72) Erfinder: Klippert, Uwe, 36280 Oberaula (DE)
(74) Vertreter: Baumgärtel, Gunnar

(56) Entgegenhaltungen:
- DE-A- 19 836 705
- FR-A- 2 760 695
- US-A- 4 657 523
- US-A- 5 749 174
- US-A- 5 950 365

## Beschreibung

Die Erfindung betrifft eine Vorrichtung zur Bereitstellung einer Relativbewegung zwischen zwei im Kraftübertragungsstrang liegenden und zueinander vorgespannten Teilen eines Seilfensterhebers gemäß dem Oberbegriff des Patentanspruchs 1. Die Vorrichtung fungiert als Dämpfer und/oder zur Gewährleistung der Bereitstellung von Sensorsignalen für einen Einklemmschutz, insbesondere wenn ein hartes Einklemmen zu einem plötzlichen und vollständigen Stillstand der Fensterscheibe führt.

Aus DE 196 18 853 C1 ist ein motorisch angetriebener Fensterheber mit elektronischem Einklemmschutz bekannt, in dessen Kraftfluß zwischen der Antriebseinheit und der Fensterscheibe eine vorgespannte Feder mit einem degressiven Verlauf angeordnet ist. Beim Überschreiten der Vorspannkraft kommt es zu einer Relativbewegung der zueinander verspannten Teile, wobei sich die Spannkraft der Feder verringert und die Einklemmkraft entsprechend herabgesetzt wird. Es ist vorgesehen, die Feder innerhalb eines im wesentlichen starren Gehäuses anzuordnen. Das zur Abstützung der großen Vorspannkraft vergleichsweise stabil ausgebildete Gehäuse weist einen hohen Platzbedarf auf, der oft nicht zur Verfügung steht. Darüber hinaus ist die Montage der dargestellten Vorrichtung relativ aufwendig.

Aus der US 5749174 A geht eine Vorrichtung zur Gewährleistung einer Relativbewegung zwischen einem als Halterung ausgebildeten gehäuseseitigen Teil einer Fensterhebereinrichtung und einem daran gelagerten Endstück hervor. Beide Teile sind durch Formschlusselemente miteinander verbunden, wobei das Endstück seitliche Flügel aufweist, die nach dem Überwinden einer Barriere der Halterung in Schlitze einrasten. Im Inneren der Halterung befindet sich stimseitig an dem Endstück anliegend eine Feder, die ein Kabel umschließt.

Die FR 2760694 A beschreibt einen Träger, der an zwei Außenseiten mit je einem Vorsprung versehen ist. Diese Vorsprünge befinden sich bei bestimmungsgemäßem Gebrauch unter anderem in Öffnungen einer Hülse, in der der Träger axial verschieblich angeordnet ist. Die Vorsprünge sind dabei derart an dem Träger angeformt, dass sie winklig entgegen der Einschubrichtung des Trägers von diesem abstehen. Die Öffnungen der Hülse sind hierzu komplementär ausgebildet. Dadurch ist der Träger in montiertem Zustand gegen ein unbeabsichtigtes Lösen aus der Hülse nach Art eines Widerhakens geschützt. Eine Feder unterstützt den Träger dabei. Diese Patentschrift offenbart einen Gegenstand nach Anspruch 1, 1. Teil.

Die aus der US 4657523 A bekannte Vorrichtung umfasst Endelemente, die axial verschieblich in Öffnungen eines Gehäuses angeordnet sind. Formschlusselemente in Form einer Verzahnung verbinden die Endelemente mit dem Gehäuse. Die Verzahnungen sind jeweils an einem Schuh je eines Federstreifens angeordnet. Die Verzahnung ist dabei so ausgebildet, dass eine Verschiebung der Endelemente aus den Öffnungen zugelassen wird, eine Verschiebung in die entgegengesetzte Richtung jedoch nicht. Je eine Feder wirkt zusätzlich unterstützend bei der Auswärtsbewegung der Endelemente.

Der Erfindung liegt die Aufgabe zugrunde, eine gattungsgemäße Vorrichtung zu entwickeln, die sich durch einen reduzierten Platzbedarf, eine einfache Montierbarkeit und eine geringe Teileanzahl auszeichnet. Darüber hinaus soll bei Einsatz von möglichst wenig Material dennoch eine hohe Stabilität und Funktionssicherheit der Vorrichtung gewährleistet sein. Insbesondere dann, wenn clipsbare Verbindungselemente zur Verbindung der beiden zueinander verspannten und verschiebbaren Teile vorgesehen sind, ist der Widerspruch zu lösen, wonach die clipsbaren Verbindungselemente für einen einfachen Fügevorgang einerseits möglichst flexibel und andererseits zur Gewährleistung einer hohen Stabilität der Verbindung möglichst starr ausgebildet sein sollten.

Erfindungsgemäß wird die Aufgabe gelöst durch die Merkmale gemäß Anspruch 1.

Die Erfindung sieht vor, dass die Formschlußelemente nach der Montage der Vorrichtung zumindest teilweise durch die Feder umschlossen werden, so dass ein Aufbiegen eines elastisch verformbaren oder radial verschiebbaren Formschlußelements durch Abstützung an der Feder verhindert wird. Das entsprechende Formschlußelement muss also lediglich die durch die Vorspannung auftretenden Zugkräfte aufnehmen; radialgerichtete Kräfte, wie z.B. Biegekräfte, werden durch die Feder aufgenommen. Idealerweise liegen die clipsbaren Formschlußelemente der beiden axial zueinander verschiebbaren Teile vollständig zwischen den endseitigen Abstützungen der Feder, so dass diese die Formschlußelemente vollständig umgreift.

In Anpassung an das Konstruktions- und Montagekonzept des Fensterhebers ist die erfindungsgemäße Vorrichtung entweder als vorgefertigte, separat montierbare Einheit oder als integraler Bestandteil der Getriebeeinheit ausgeführt werden. Für eine vorgefertigte Einheit wäre eine Lageröffnung in einem Gehäuseteil der Getriebeeinheit vorzusehen, in die eines der zueinander verschiebbaren Teile der erfindungsgemäßen Vorrichtung einsteckbar und gegen einen Anschlag abgestützt ist. Im anderen Fall sind die Formschlußelemente Bestandteil eines Gehäuseteils und erstrecken sich entlang der Seilachse.

Die Formschlußelemente des anderen Teils sind vorzugsweise Bestandteil einer üblicherweise verwendeten Führungshülse, die unter Zwischenschaltung einer Seillängenausgleichsfeder das Ende eines Bowdenrohres abstützt. Sie können aber auch Bestandteil eines Adapters sein, der zwischen dem anderen Formschlußelemente tragenden Teil und der Führungshülse angeordnet ist. Dies ermöglicht in einfacher Weise die Einführung der erfindungsgemäßen Vorrichtung in bereits laufende Serien, da lediglich die Länge eines Bowdenrohres gekürzt werden muß; alle übrigen Teile können unverändert übernommen werden.

Durch die erfindungsgemäße Sicherung der im Eingriff stehenden Formschlußelemente der miteinander verspannten und relativ zueinander verschiebbaren Teile wurden die Voraussetzungen geschaffen, daß als Formschlußelemente Clipsverbindung eingesetzt werden können. Dies ist Grundlage der Lösung des Widerspruchs, wonach zur Herstellung einer einfachen Verbindung zwischen zwei Teilen elastisch deformierbare Formschlußelemente angestrebt werden sollten, wohingegen die Verspannung dieser Teile durch eine vergleichsweise hohe Federkraft eher eine massive Ausbildung der Verbindungsstellen erfordert, was jedoch einer einfachen Montierbarkeit entgegen steht. Erfindungsgemäß wird der Widerspruch dadurch gelöst, daß wenigstens ein Teil der Vorrichtung zur Gewährleistung einer Relativbewegung nach der Montage zusätzlich eine Sicherungsfunktion für den dauerhaften Eingriff der Formschlußelemente übernimmt.

Die Erfindung läßt sich in sehr unterschiedlichen konstruktiven Ausführungen realisieren, von denen abhängig sein wird, ob beispielsweise beide der an der Verbindung der zueinander verschiebbaren Teile beteiligten Clipsbereiche elastisch ausgeführt werden sollen oder nur der Clipsbereich eines Teils. Im zuerstgenannten Fall kann der relative Deformationsgrad der Clipsbereiche vergleichsweise geringer gehalten werden; es sind unter Umständen jedoch Sicherungsmaßnahmen für beide Clipsbereiche notwendig, die einen dauerhaften Formschluß garantieren. Eine Sicherung des nach innen federnden Clipsbereichs kann über einen axialen Kanal erfolgen, in den das Sicherungselement, z.B. in Form einer den Bowden abstützenden Führungshülse, eingesteckt wird. Im zweiten Fall ist der Clipsbereich des einen Teils im wesentlichen starr ausgebildet, während der andere Clipsbereich die gesamte zur Herstellung des Formschlusses notwendige Flexibilität aufweisen muß.

Von der Erfindung soll auch eine Vorrichtung mit einem separaten Sicherungselement umfaßt sein, das insbesondere in Verbindung mit den üblicherweise verwendeten Führungshülsen für einen Seillängenausgleich einen Bowdenrohr-Fensterhebers zur Anwendung kommen kann. Spezielle entgegen der Montagerichtung ausgerichtete Anschläge sollen die Verliersicherheit des separaten Sicherungselelements während des Transports der Vorrichtung bis zu seiner Montage garantieren.

Eine weitere Erfindungsvariante sieht die Verwendung schalenartiger oder anderer radial steckbarer Elemente vor, die eines der beiden zueinander verschiebbaren Teile bilden und die vorgespannte Feder einseitig abstützen. Die Sicherung der Funktionsposition dieses Teils bzw. dieser Teile erfolgt durch einen Formschluß mit dem Federende.

Nachfolgend wird die Erfindung anhand von Ausführungsbeispielen und den dargestellten Figuren näher erläutert. Es zeigen:
- Figur 1a: Seitenansicht einer Vorrichtung mit äußeren Clipsbereichen und einer vorgespannten Feder als Sicherungselement;
- Figur 1b: Schnittdarstellung von Figur 1a;
- Figur 1c: perspektivische Darstellung von Figur 1a;
- Figur 1d: wie Figur 1c, jedoch ohne Federn;
- Figur 1e: perspektivische Darstellung des gehäuseseitigen relativ verschiebbaren Teils;
- Figur 2: Schnittdarstellung einer Vorrichtung mit vollständigem Umgriff des Sicherungselements um den elastischen Clipsbereich;
- Figur 3: Schnittdarstellung einer Vorrichtung mit Führungskanälen in beiden zueinander verschiebbaren Teilen;
- Figur 4a: Seitenansicht einer Vorrichtung mit äußeren und inneren Clipsbereichen sowie
- Figur 4b: äußeren und inneren Sicherungselementen; Schnittdarstellung von Figur 4a;
- Figur 4c: perspektivische Darstellung von Figur 4a;
- Figur 4d: wie Figur 4c, jedoch ohne Feder;
- Figur 5a: Seitenansicht einer Vorrichtung mit nichtverspannten zueinander relativ verschiebbaren Teilen;
- Figur 5b: Schnittdarstellung von Figur 5a, um 90° gedrehte (Schnitt (A-A);
- Figur 5c: Schnittdarstellung von Figur 5a (Schnitt B-B);
- Figur 5d: perspektivische Darstellung von Figur 5a;
- Figur 5e: perspektivische Explosivdarstellung der beiden zueinander verschiebbaren Teile;
- Figur 5f: Querschnitt durch die Vorrichtung (Schnitt C-C);
- Figur 5g: Draufsicht auf die Vorrichtung
- Figur 5h: perspektivische Explosivdarstellung der Vorrichtung von Figur 5a;
- Figur 6a: Seitenansicht einer Vorrichtung mit einem flexiblen rohrförmig ausgebildeten Clipsbereich;
- Figur 6b: Schnittdarstellung von Figur 6a;
- Figur 6c: Schnittdarstellung von Figur 6a, um 90° gedreht;
- Figur 6d: perspektivische Darstellung von Figur 6a;
- Figur 6e: perspektivische Explosivdarstellung der zueinander relativ verschiebbaren Teile;
- Figur 7a: Seitenansicht einer Vorrichtung mt einen radial steckbaren der beiden zueinander relativ verschiebbaren Teile;
- Figur 7b: Schnittdarstellung von Figur 7a, um 90° gedreht;
- Figur 7c: perspektivische Darstellung von Figur 7a;
- Figur 7d: wie Figur 7c, jedoch ohne Feder;
- Figur 8a: Seitenansicht einer Vorrichtung mit einem doppelschalenförmigen radial montierbaren der beiden zueinander verschiebbaren Teile;
- Figur 8b: Schnittdarstellung von Figur 8a, um 90° gedreht;
- Figur 8c: perspektivische Darstellung von Figur 8a;
- Figur 8d: wie Figur 8c, jedoch ohne Feder;
- Figur 9: doppelsträngiger Bowdenrohr-Fensterheber mit elektrischem Antrieb und einer erfindungsgemäßen Vorrichtung, die in einen Seilausgang des Getriebegehäuses eingesteckt ist.

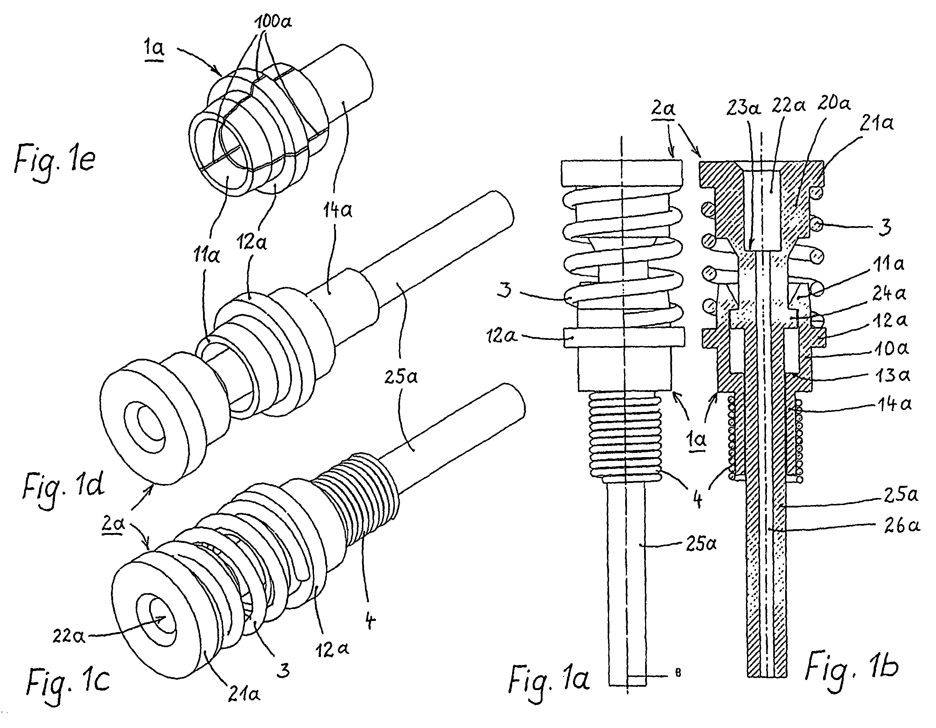

In den Figuren 1a bis 1e ist eine Vorrichtung in verschiedenen Ansichten dargestellt, deren eines Teil 2a starre innere Formschlußelemente in Gestalt eines ringförmigen Vorsprungs 24a mit flexiblen clipsbaren Formschlußelementen 11a des anderen Teils 1a im Eingriff stehen. Die hakenartigen Formschlußelemente 11a des Teils 1a bilden das freie Ende des Bereichs 10a, der durch axial verlaufende Schlitze 100a (nur in Figur 1e dargestellt) in federnde Segmente gegliedert ist. Am anderen Ende geht das Teil 1a in einen rohrförmigen Führungsbereich 14a mit verringertem Durchmesser über, der im Inneren das Führungsrohr 25a des Teils 2a aufnimmt und außen eine gehäuseseitig abgestützte Feder 4 zum Ausgleich der Seillängung trägt.

Das obere Ende des Teils 2a ist als Stützbereich 20a für ein Bowdenrohr ausgebildet, das in eine rohrformige Öffnung 22a eingesteckt wird und sich mit seinem Ende am Anschlag 23a abstützt. Zur Abstützung der Feder 3 ist die äußere Kontur des Stützbereichs 20a als ringförmiger Vorsprung 21a gestaltet. Die andere Seite der Feder 3 wird am ringförmigen Vorsprung 12a des Teils 1a abgestützt, wobei die Feder 3 den Bereich der Formschlußelemente 11a, 24a übergreift und so auch bei sehr großer axialer Verspannung eine sichere Lagefixierung der federnden Bereiche 10a gewährleistet. Die Vorspannkraft der Feder 3 wird in der Regel so gewählt, daß sie wenigstens der Summe aus der Gewichtskraft der Fensterscheibe und allen bis zur Vorrichtung wirksam werdenden Kräften entspricht. Somit kommt es über den Hub der Fensterscheibe bis zum Erreichen des endlagenseitigen Dichtungsbereichs nicht zur Komprimierung der Feder 3.

Sobald die durch das Bowdenrohr auf das Teil 2a ausgeübte Stützkraft die Vorspannkraft der Feder 3 übersteigt wird diese komprimiert und das Teils 2a im Teil 1a verschoben. Diese Verschiebung wird durch einen Anschlag 13a begrenzt, der den Übergang zwischen den Bereichen 10a und 14a bildet. In jedem Falle ist aber die mögliche Relativbewegung zwischen den Teilen 1a und 2a so ausreichend groß dimensioniert, daß bei einer Blockierung der Verstellbewegung der Fensterscheibe der Antrieb die zur Erkennung des Blockierzustands notwendigen Signale noch generieren kann. Bei einem harten, d.h. plötzlichen Blockieren muß in der Regel noch ein Sensorsignal der Auswerteelektronik zugeführt werden. Die Voraussetzungen sind dann erfüllt, wenn die Relativbewegung zwischen den beiden Teilen 1a, 2a zur Erzeugung einer Signalperiode ausreicht. Dadurch ist sichergestellt, daß nach dem Beginn des Einklemmfalls wenigstens noch ein Signal generiert wird.

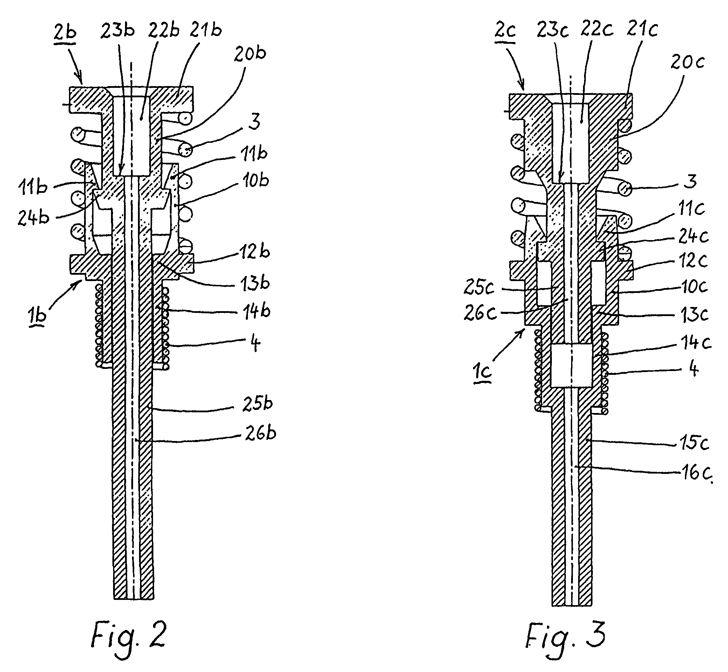

Im Vergleich zu dem voran beschriebenen Ausführungsbeispiel unterscheidet sich die Vorrichtung von Figur 2 im wesentlichen durch eine axial verschobene Anordnung des starren Formschlußelements 24b des Teils 2b und des ringförmigen Vorsprungs 12b des Teils 1b. Durch die Verlagerung des ringförmigen Vorsprungs 12b in den Bereich des Anschlags 13b übergreift die Feder 3 den gesamten elastisch deformierbaren Bereich 10b und sichert so den Formschluß zwischen den Formschlußelementen 11b und 24b.

Eine weitere der Vorrichtung von Figur 1 sehr ähnliche Erfindungsvariante zeigt Figur 3. Sie unterscheiden sich lediglich dadurch, daß das mit dem Bowdenstützbereich 20c verbundene Führungsrohr 25c nicht durch das Teil 1c hindurch reicht, sondern im Führungsbereich 14c endet. Stattdessen schließt sich an den Führungsbereich 14c ein weiteres Führungsrohr 15c an, so daß das Seil durch zwei separate, axial hintereinander angeordnete Kanäle geführt wird.

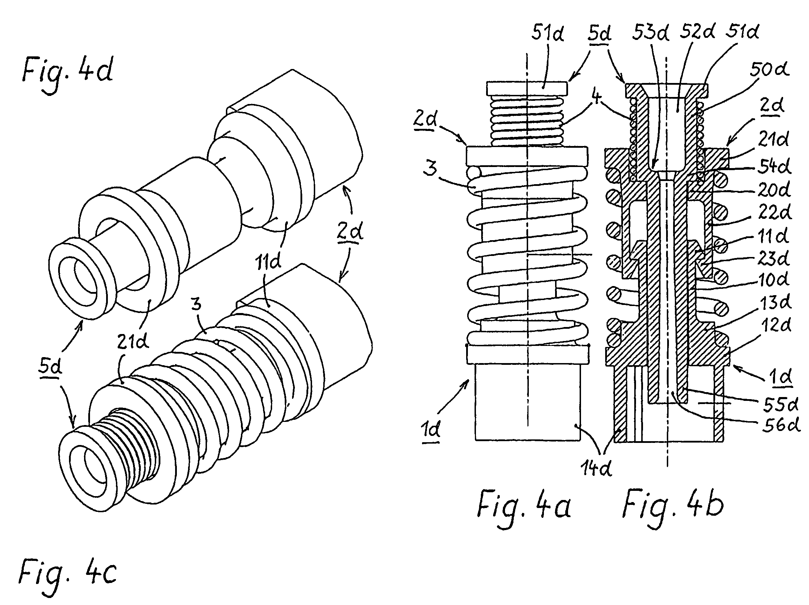

Das Ausführungsbeispiel der Figuren 4a bis 4d besitzt zueinander verschiebliche Teile 1d, 2d mit jeweils an den federelastisch gelagerten Bereichen 10d, 20 angearbeiteten Formschlußelementen 11d, 23d. Um ein Wegklappen der Formschlußelemente 11d des gehäuseseitigen Teils 1d nach innen zu verhindern, ist die Führungshülse 55d in einen entsprechenden zentralen Kanal eingesteckt. Die Lage des Formschlußelements 23d des bowdenseitigen Teils 2d wird wie bei allen voran beschriebenen Beispielen durch den Umgriff der Feder 3 gesichert. Zur Gewährleistung eines Seillängenausgleichs ist die Feder 4 vorgesehen, die sich einerseits am ringförmigen Vorsprung 51d des Stützbereichs 50d und andererseits an einem nach innen gerichteten Vorsprung 20d des Teils 2d abstützt, der auch als Anschlag zur Begrenzung der Relativbewegung zwischen den Teilen 1d, 2d dient. Der Vorteil dieser Ausführungsform besteht in der Möglichkeit der Weiterverwendung der in Gebrauch befindlichen üblichen Führungshülsen 5d und der einfachen Umstellung von bereits in Serie befindlichen Vorrichtungen ohne eine vorgespannte Feder 3.

In den Figuren 5a bis 5h ist eine Vorrichtung dargestellt, bei der sich die vorgespannte Feder 3 zwischen dem ringförmigen Vorsprung 12e und dem am freien Ende des elastischen Bereichs 10e angeordneten hakenförmigen Formschlußelement 11e des gehäuseseitigen Teils 1e abstützt. Zwischen die Federschenkel (Bereiche 10e) und in den sich daran anschließenden axialen Kanal 16e ist das bowdenseitige Teil 2e einsteckbar, das einem Ausweichen der Formschlußelemente 11e nach innen entgegenwirkt. Der Federschenkel 10e weist in der Nähe des Formschlußetements 11e einen Anschlag 15e bildenden Absatz auf, der im Zusammenwirken mit dem einen Anschlag 25e bildenden Absatz des eingesteckten Teils 2e eine Verliersicherung bildet.

Auch das Teil 2e weist einen axialen Kanal 27e auf, in dem das Führungsrohr 55e der Führungshülse 5e geführt wird. Der das Bowdenrohrende aufnehmende Stützbereich 50e trägt auf seiner äußeren Kontur eine Feder 4 zum Seillängenausgleich, die sich einerseits am ringförmigen Vorsprung 51e und andererseits an dem axialen Anschlag 24e des oberen Endes des verschiebbaren Teils 2e abstützt. Bei einer Seillängung würde die Feder 4 die Führungshülse 5e um die entsprechende Länge aus dem Kanal 27e des Teils 2 herausdrücken.

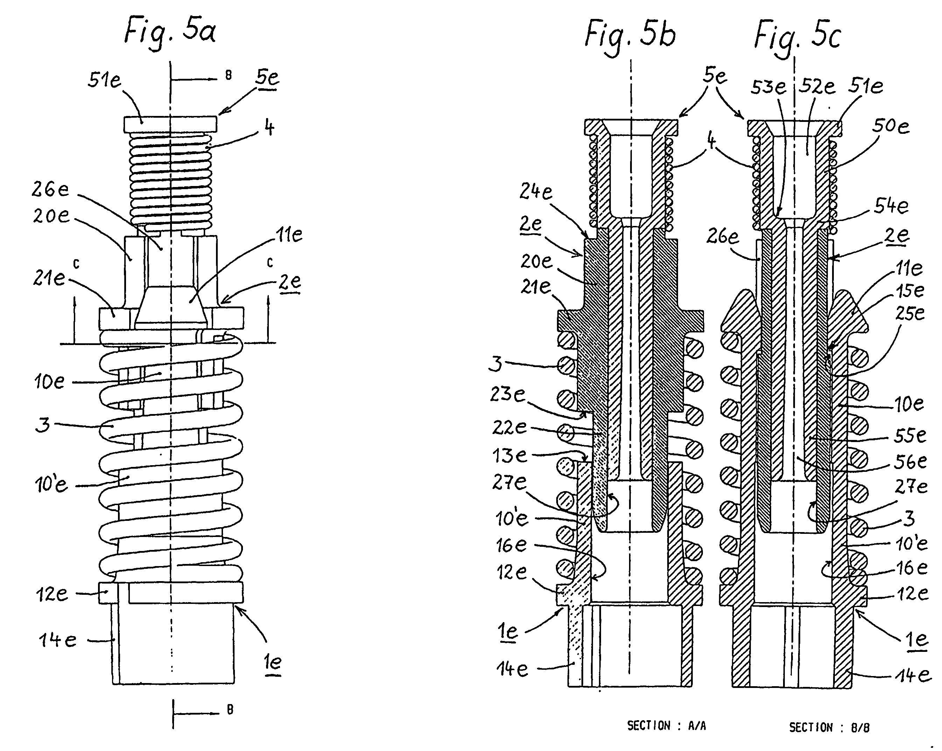

Wie man aus den Figuren 5b und 5c sowie den Figuren 5e und 5h sehr gut erkennen kann, sind die zueinander verschieblichen Teile 1e und 2e nicht rotationsymmetrisch ausgebildet. Sie besitzen vielmehr gegenüberliegende unterschiedliche Sektoren mit unterschiedlichen Aufgaben. So ist der Sektor 20e des Teils 2e nicht nur mit einem Anschlag 24e für die Seillängenausgleichsfeder 4, sondern auch mit einem Vorsprung 21e ausgestattet, der die Stützkraft des Bowdenrohres auf das zugeordnete Ende der vorgespannten Feder 3 überträgt und bei Überschreitung der Vorspannkraft die Feder 3 komprimiert, was mit einer Relativbewegung zwischen den beiden Teilen 1e, 2e und einem Abheben dieses Federendes von den Anschlägen 11e einhergeht. Jenseits des Vorsprungs 21e findet der Sektor 20e eine Fortsetzung, die in einem Anschlag 23e in Verbindung mit dem Anschlag 13e des Teils 1e zur Begrenzung der Relativbewegung fungiert. Der sich daran anschließende Zapfen 22e dient der Führung des Teils 2e im Kanal 16e des Teils 1e. Die sich über den Zapfen 22e bis in die Nähe des Vorsprungs 21e erstreckende Fläche 26'e dient der Führung der Federschenkel 10e und setzt sich über einen Absatz 25e in der Fläche 26e fort. Im Zusammenwirken der Absätze 25e mit den Absätzen 15e an den Innenseiten der Federschenkel 10e entsteht - wie schon erwähnt - eine Verliersicherung, die ein unbeabsichtigtes Herausgleiten des bowdenseitigen Teils 2e aus dem gehäuseseitigen Teil 1e verhindern soll.

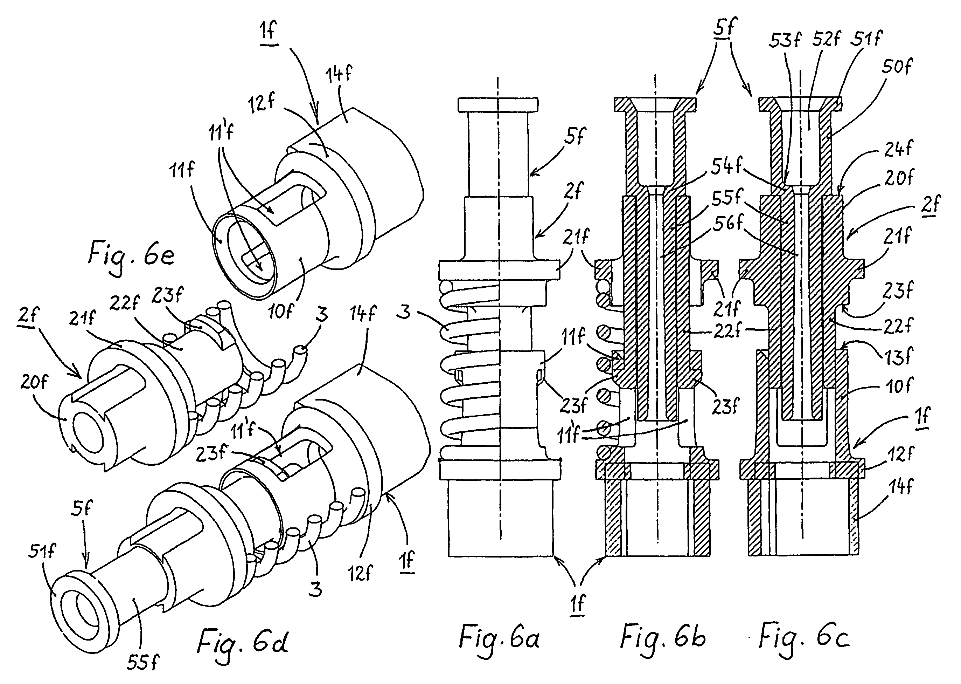

Eine weitere Erfindungsvariante zeigen die Figuren 6a bis 6e. Sie verwendet ein gehäuseseitiges Teil 1f, das einerseits über den Kupplungsbereich 14f mit einem (nicht dargestellten) Gehäuse verbindbar ist, und das andererseits einen elastisch deformierbaren Bereich 10f mit im wesentlichen zylindermantelförmiger Kontur aufweist. Der Bereich 10f ist mit Ausnehmungen 11'f versehen, die durch den für die Abstützung der Feder 3 vorgesehenen Vorsprung 12f und durch einen geschlossenen Ring 11f begrenzt, wobei die die Ausnehmung 11'f begrenzende innere Fläche des Ringes 11f als Formschlußelement zum Eingriff des Formschlußelements 23f des bowdenseitigen Teils 2f fungiert. Das Formschlußelement 23f ist als hakenförmiger Vorsprung am Zapfen 22f angeformt.

Vor der Verbindung der beiden Teile 1f und 2f muß die Feder 3 von den Bereichen der Formschlußelemente 11f, 23f weggedrückt werden, um die für die Verbindung notwendigen elastischen Deformationen zuzulassen. Beim Einführen des Teils 2f in das Teil 1f wird zunächst der Ring 11f durch die Formschlußelemente 23f elastisch deformiert bis die Formschlußelemente 23f in die Ausnehmung einrasten. Anschließend kann die Feder 3 freigegeben werden, die sich nunmehr zwischen den Vorsprüngen 12f und 21f abstützt und und den Bereich der Formschlußelemente 11f und 23f derart eng umschließt, daß der zur Entkopplung notwendige Deformationsgrad der Formschlußelemente 11f, 23f durch die Feder 3 ausgeschlossen wird. Eine Begrenzung des Federwegs zwischen den Teilen 1f und 2f ist durch die axiale Länge der Ausnehmung 11'f gegeben indem der Rand der Ausnehmung 11'f für das Formschlußelement 23f als Anschlag dient.

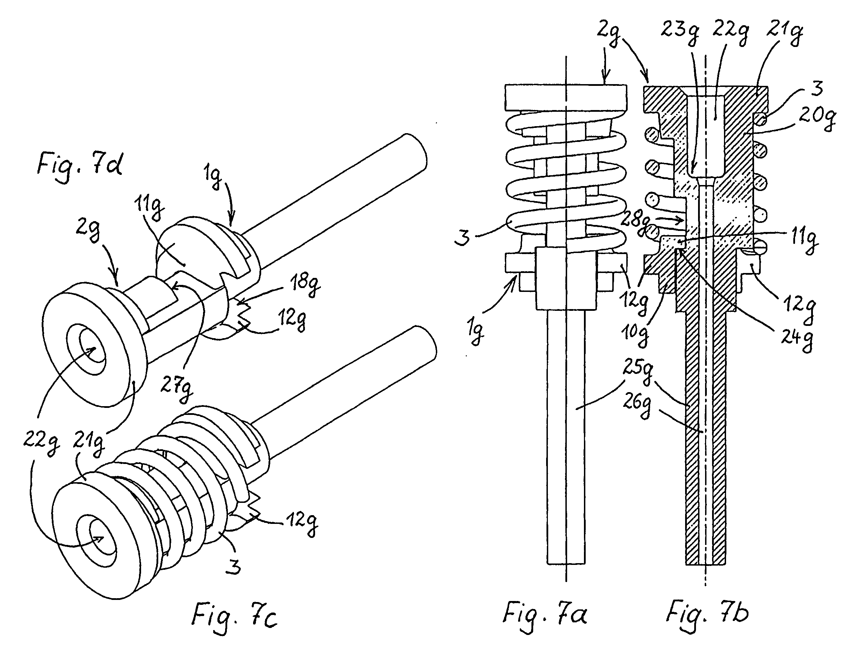

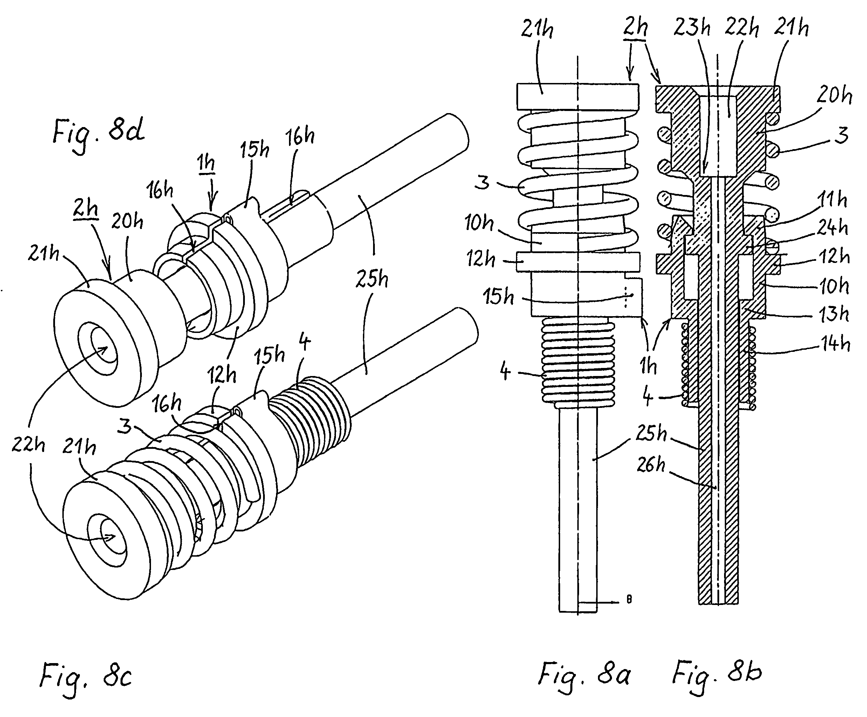

Sämtliche voran beschriebenen Vorrichtungen besitzen zueinander verschiebliche Teile 1, 2, die durch eine axiale Montagebewegung zueinander positioniert werden. Dies trifft für die nachfolgend erläuterten Ausführungsbeispiele der Figuren 7 und 8 nicht zu. Hier erfolgt die Montagebewegung des gehäuseseitigen Teils 1g, 1h radial zur Längsachse des bowdenseitigen Teils 2g, 2h.

In den Figuren 7a bis 7d ist ein gehäuseseitiges Teil 1g mit einem Freischnitt 18g dargestellt, der ein radiales Aufstecken auf das andere Teil 2g ermöglichen soll. Das Teil 1g weist einen radial nach innen abkrakenden Bereich auf, der mit Abschluß der Montage in einen Freischnitt 28g des Teils 2g eingreift und mit einem als Anschlag 24g fungierenden Vorsprung des Teils 2g in Eingriff bringbar ist. Zwischen den Vorsprüngen 12g und 21g wird die vorgespannte Feder 3 abgestützt. Durch eine axial gerichtete Aufwölbung 11f über dem Vorsprung 12g auf der dem Freischnitt gegenüberliegenden Seite und durch eine dem Innendurchmesser der Feder 3 annähernd entsprechenden Ausdehnung des Stützbereichs 20g des Teils 2g kann eine dauerhafte und sichere Positionierung der beiden Teile 1g und 2g zueinander gewährleistet werden.

Bei einer Überschreitung der Vorspannkraft der Feder 3 durch die Stützkraft des in die Öffnung 22g eingesteckten Bowdenrohrs wird das Teil 2g niedergedrückt, wobei sich der Anschlag 11g innerhalb des Freischnitts 28g verschiebt. Die maximal mögliche Relativbewegung wird wiederum durch die lichte Weite des Freischnitts nach der Montage des Teils 1g bestimmt.

Das Ausführungsbeispiel von Figur 8 entspricht im wesentlichen dem von Figur 1, jedoch mit dem Unterschied, daß das Teil 1h aus zwei durch Schlitze 16h geteilte Halbschalen besteht, die durch ein Filmscharnier 15h miteinander verbunden sind.

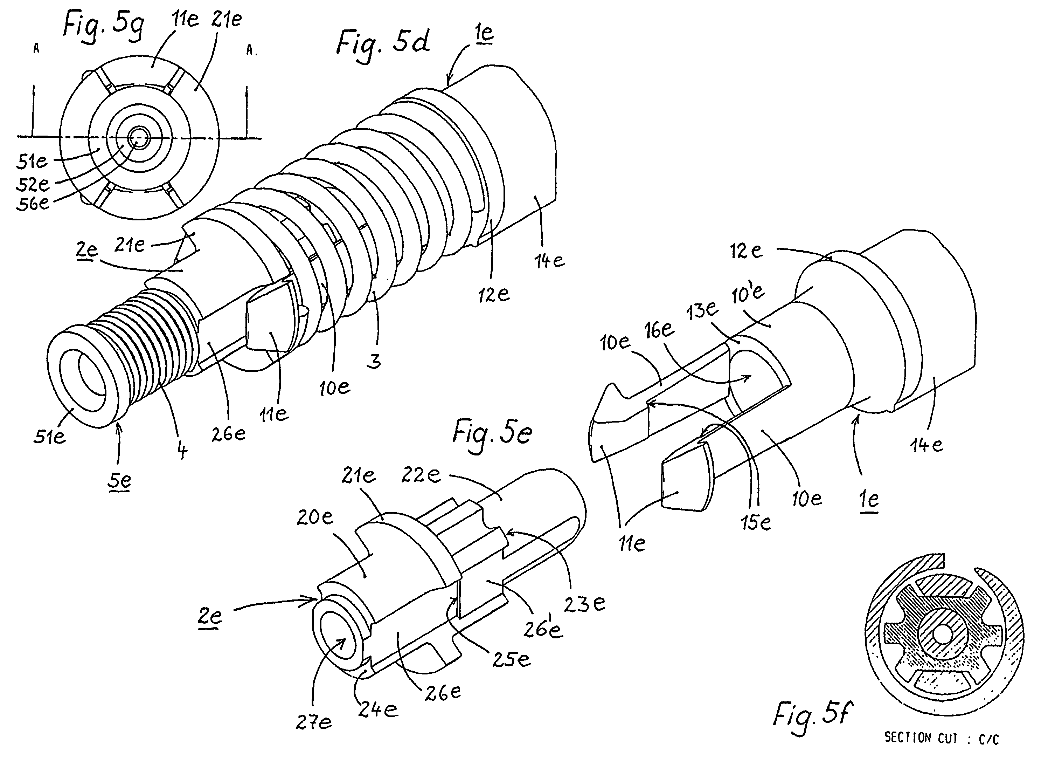

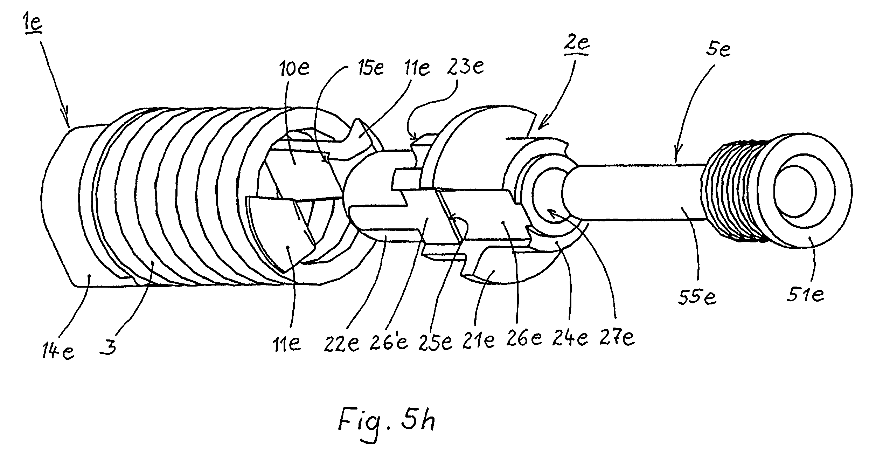

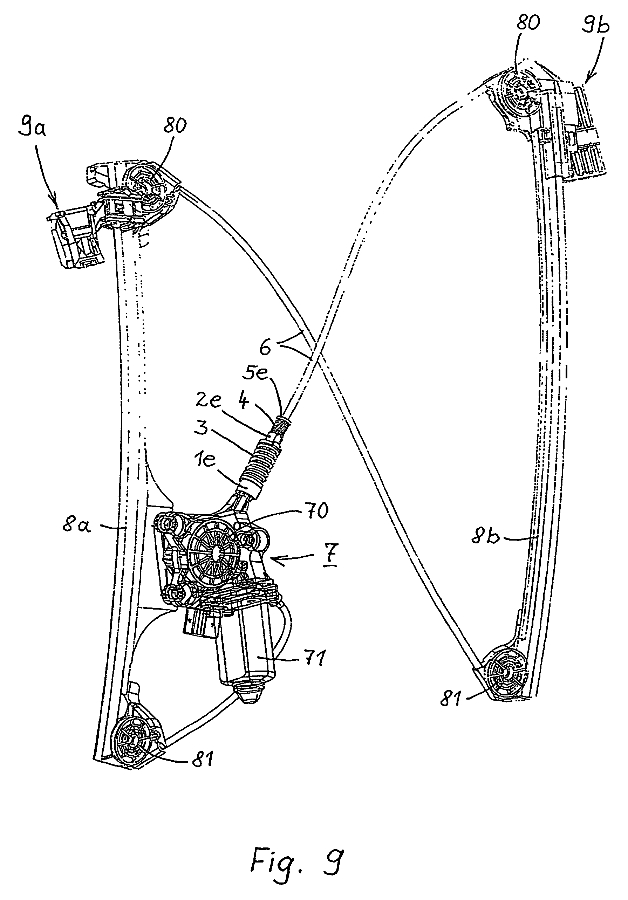

Figur 9 zeigt einen doppelsträngigen Bowdenrohr-Fensterheber mit zwei Führungsschienen 8a, 8b, auf denen Mitnehmer 9a, 9b zur Anbindung der Fensterscheibe gleitend geführt sind. Die Antriebskraft wird von einer aus Motor 71 und Getriebe 70 bestehenden Antriebseinheit 7 über die Seilschlaufe auf die Mitnehmer 9a, 9b übertragen. Dabei wird das Seil über obere und untere Seilumlenkungen 80, 81 geführt. An einem der Seilausgänge des Getriebes 70 ist eine Vorrichtung gemäß des Ausführungsbeispiels von Figur 5 angesteckt.

### Bezugszeichenliste

- 1a -1h: gehäuseseitiges Teil
- 10a-10h: Bereich, der die starren oder elastischen Formschlußelemente (z.B. Clipselemente) trägt
- 10'e: Sockel
- 11a - 11h: Formschlußelement, z.B. clipsbarer Haken
- 11'f: Ausnehmung
- 12a - 12h: ringförmiger Vorsprung
- 13a -13d: Verjüngung mit Anschlag
- 13e, 13f: Anschlag
- 13h: Verjüngung mit Anschlag
- 14a -14c: Führungsbereich
- 14d - 14f: Adapter, Kupplungsbereich
- 14h: Führungsbereich
- 15c: Führungsrohr
- 15e: Anschlag, Absatz
- 15h: Filmschamier
- 16c, 16e: Kanal
- 16h: Schlitz
- 17h: Schlitz
- 18g: Freischnitt
- 100a: Schlitz

- 2a - 2h: bowdenseitiges Teil
- 20a - 20c: Stützbereich
- 20d: Vorsprung
- 20e, 20f: Sektor
- 20g, 20h: Stützbereich
- 21a - 21h: ringförmiger Vorsprung
- 22a - 22c: Hohlraum
- 22d: Bereich, der die Formschlußelemente trägt
- 22e: Zapfen
- 22f: Zapfen
- 22h: Hohlraum
- 23a - 23c: Anschlag
- 23d,: Formschlußelement
- 23e: Anschlag
- 23f: Formschlußelement
- 23g, 23h: Anschlag
- 24a - 24c: Formschlußelement, ringförmiger Vorsprung
- 24e: Anschlag
- 24g: Formschlußelement, Anschlag
- 24h: Formschlußelement, ringförmiger Vorsprung
- 25a - 25c: Führungsrohr
- 25e: Anschlag, Absatz
- 25g, 25h: Führungsrohr
- 26a - 26c: Kanal
- 26e: Fläche, Aussparung, offener Kanal
- 26'e: Fläche
- 26g, 26h: Kanal
- 27e: Kanal
- 28g: Freischnitt

- 3: vorgespannte Feder

- 4: Feder zum Seillängenausgleich

- 5d - 5f: Führungshülse zur Abstützung des Bowdenrohrs
- 50d -50f: Stützbereich
- 51d - 51f: ringförmiger Vorsprung
- 52d - 52f: Bowdenrohraufnahme
- 53d - 53f: Boden
- 54d - 54f: Absatz zwischen Stützbereich und Kanal
- 55d - 55f: Führungsbereich
- 56d - 56f: Kanal

- 6: Bowdenrohr

- 7: Antrieb
- 70: Getriebegehäuse
- 71: Motor

- 8a: Führungsschiene
- 8b: Führungsschiene
- 80: obere Seilumlenkungen
- 81: untere Seilumlenkungen

- 9a: Mitnehmer für eine Fensterscheibe
- 9b: Mitnehmer für eine Fensterscheibe

## Patentansprüche

1. Vorrichtung zur Gewährleistung einer Relativbewegung zwischen einem gehäuseseitigen Teil und einem daran direkt oder indirekt gelagerten Teil, an das sich ein Bowden eines Seilfensterhebers abstützt, wobei die beiden zueinander verschieblichen und miteinander durch Formschlusselemente (11a - 11h, 23d, 23f, 24a - 24c, 24g, 24h) verbundenen Teile mittels einer vorgespannten Feder (3) gegen wechselseitig zugeordnete Anschläge gedrückt werden, wobei
die Verbindung der Formschlusselemente (11a - 11h, 23d, 23f, 24a - 24c, 24g, 24h) nach Abschluss der Montage durch die vorgespannte Feder (3) gegen unbeabsichtigtes Lösen gesichert ist, **dadurch gekennzeichnet, dass** die Formschlusselernente (11a - 11h, 23d, 23f, 24a - 24c, 24g, 24h) oder die damit verbundenen flexiblen Bereiche (10a, 10c, 10h) zumindest teilweise von der Feder umgriffen (3) sind.

2. Vorrichtung nach Anspruch 1, **dadurch gekennzeichnet, dass** die Formschlußelemente (11b, 24b; 23d; 11f, 23f) zwischen den beiden endseitigen Abstützungen (12b, 21b; 12d, 21d; 12f, 21f) der Feder (3) angeordnet sind, so dass diese von der Feder (3) vollständig umgriffen werden.

3. Vorrichtung nach einem der voranstehenden Ansprüche, **dadurch gekennzeichnet, dass** das gehäuseseitige Teil integraler Bestandteil eines Getriebegehäuses oder einer Seilumlenkung ist.

4. Vorrichtung nach einem der voranstehenden Ansprüche, **dadurch gekennzeichnet, dass** die Formschlußelemente (24a - 24 c, 24g, 24h) des bowdenseitigen Teils (2a - 2c, 2g, 2h) Bestandteil einer das Bowdenrohr abstützenden Führungshülse sind.

5. Vorrichtung nach einem der voranstehenden Ansprüche, **dadurch gekennzeichnet, dass** die Formschlußelemente (11a - 11h, 23d, 23f, 24a - 24c) als Clipsverbindung ausgebildet sind, die durch eine axiale Verschiebung der die Formschlußelemente aufweisenden flexiblen Bereiche (10a - 10f, 22d) miteinander in Eingriff gebracht werden können.

6. Vorrichtung nach einem der voranstehenden Ansprüche, **gekennzeichnet durch** einen Adapter (14d 14f) des gehäuseseitigen Teils (1d - 1f) zu seiner Verbindung mit einem zugeordneten karosseriefesten Teil, insbesondere mit einem Getriebegehäuse oder einer Seilumlenkung.

7. Vorrichtung nach einem der voranstehenden Ansprüche, **dadurch gekennzeichnet, dass** die Formschlußelemente (24a - 24c, 24h, 23f) des einen Teils (2a - 2c, 2f, 2h) im wesentlichen starr ausgebildet und die Formschlußelemente (11a - 11c, 11f, 11h) des anderen Teils (1a - 1c, 1f, 1h) federnd gelagert sind.

8. Vorrichtung nach Anspruch 7, **dadurch gekennzeichnet, dass** die Formschlußelemente (23f) des einen Teils (2f) im wesentlichem starr ausgebildet sind und dass die zugeordneten Formschlußelemente (11f) des anderen Teils (1f) an Ausnehmungen (11'f) in einem rohrförmigen Abschnitt (10f) ausgebildet sind, dessen Wandung bei Einführung der im wesentlichen starren Formschlußelemente (23f) elastisch deformiert wird.

9. Vorrichtung nach einem der voranstehenden Ansprüche 1 bis 6, **dadurch gekennzeichnet, dass** die Formschlußelemente (10d, 11d, 22d, 23d) beider Teile (1d, 2d) federnd gelagert sind.

10. Vorrichtung nach Anspruch 6 und 9, **dadurch gekennzeichnet, dass** das Teil (1d) mit den innenliegenden Formschlußelementen (11d) einen axialen Kanal aufweist, in den ein Sicherungselement (55d) zur Aufrechterhaltung des Formschlusses mit den zugeordneten Formschlußelementen (23d) einschiebbar ist.

11. Vorrichtung nach Anspruch 10, **dadurch gekennzeichnet, dass** als Sicherungselement das Führungsrohr (55d) der Führungshülse (5d) fungiert.

12. Vorrichtung nach Anspruch 1, **dadurch gekennzeichnet, dass** die Vorspannung der Feder (3) in einer unbelasteten Vorrichtung ausschließlich durch axial beabstandete Anschläge (11e, 12e) des gehäuseseitigen Teils (1e) abgestützt wird, und dass das dazu verschiebbare Teil (2e) mittels einer in Form von entgegen der Montagerichtung gerichteten Anschlägen (15e, 25e) ausgebildeten Verliersicherung in seiner Funktionsposition gehalten wird.

13. Vorrichtung nach Anspruch 12, **dadurch gekennzeichnet, dass** der Anschlag (15e) des Teils (1e) an der Innenseite des das Formschlußelement (11e) tragenden flexiblen Bereich (10e) angeordnet ist.

14. Vorrichtung nach einem der voranstehenden Ansprüche 1 bis 4, **dadurch gekennzeichnet, dass** die Formschlußelemente als Steckverbindung ausgebildet sind, wobei die Formschlußelemente (11g) des einen Teils (1g) durch eine radialgerichtete Montagebewegung mit den Formschlußelementen (24g) des anderen Teils (2g) in Eingriff gebracht werden.

15. Vorrichtung nach einem der voranstehenden Ansprüche 1 bis 4, **dadurch gekennzeichnet, dass** das eine Teil (1h) aus schalenartig, insbesondere halbschalenartig ausgebildeten Elementen besteht, die das andere Teil (2h) weitestgehend umschließen.

16. Vorrichtung nach Anspruch 15, **dadurch gekennzeichnet, dass** die benachbarten schalenartig ausgebildeten Elemente aus Kunststoff bestehen und durch Filmscharniere (15h) miteinander in Verbindung stehen.

## Claims

1. A device for ensuring relative motion between a component on the casing side and a component positioned directly or indirectly thereto, on which a Bowden of a cable window lifter supports itself, whereby the two components which can be displaced to one another and which are connected to one another through friction locking components (11a - 11h, 23d, 23f, 24a - 24c, 24g, 24h) are pressed by means of a prestressed spring (3) against reciprocally positioned stops, wherein after completion of the assembly the connection of the friction locking components (11a - 11h, 23d, 23f, 24a - 24c, 24g, 24h) is ensured against unintentional loosening through the prestressed spring (3)
**characterised in that**
the friction locking components (11a - 11h, 23d, 23f, 24a - 24c, 24g, 24h) or the flexible regions (10a, 10c, 10h) connected therewith are at least partially encompassed (3) by the spring.

2. A device according to Claim 1, **characterised in that** the friction locking components (11b, 24b; 11d, 23d; 11f, 23f) are positioned between the two end-side supports (12b, 21b; 12d, 21d; 12f, 21f) of the spring (3) in such a way that they are completely encompassed by the spring (3).

3. A device according to one of the preceding claims, **characterised in that** the component on the casing side is an integral component of a drive case or of a cable deflection.

4. A device according to one of the preceding claims, **characterised in that** the friction locking components (24a - 24c, 24g, 24h) of the component on the Bowden side (2a - 2c, 2g, 2h) are a constituent part of a guiding shell supporting the Bowden tube.

5. A device according to one of the preceding claims **characterised in that** the friction locking components (11a - 11h, 23d, 23f, 24a - 24c) are formed as a clippable connection, which can be brought to engage through an axial displacement of the flexible fields (10a - 10f, 22d) carrying the friction locking components.

6. A device according to one of the preceding claims, **characterised by** an adapter (14d 14f) of the component on the casing side (1d - 1f) to its connection with an allocated bodywork-secure component, in particular with a drive case or a cable deflection.

7. A device according to one of the preceding claims, **characterised in that** the friction locking components (24a - 24c, 24h, 23f) of one component (2a - 2c, 2f, 2h) are essentially rigidly formed and the friction locking components (11a - 11c, 11f, 11h) of the other component (1a - 1c, 1f, 1h) are positioned elastically.

8. A device according to Claim 7, **characterised in that** the friction locking components (23f) of one component (2f) are essentially rigidly formed and **in that** the allocated friction locking components (11f) of the other component (1f) are formed on recesses (11'f) in a pipe-form section (10f), whereby the wall thereof is elastically deformed upon insertion of the essentially rigid friction locking components (23f).

9. A device according to one of the preceding Claims 1 to 6, **characterised in that** the friction locking components (10d, 11d, 22d, 23d) of both components (1d, 2d) are elastically positioned.

10. A device according to Claim 6 and 9, **characterised in that** the component (1d) with the inner-lying friction locking components (11d) has an axial channel into which a securing component (55d) can be inserted for the purpose of maintaining the friction locking with the allocated friction locking components (23d).

11. A device according to Claim 10, **characterised in that** the guiding tube (55d) of the guiding shell (5d) functions as the securing component.

12. A device according to Claim 1, **characterised in that** the prestress of the spring (3) in an unburdened device is exclusively supported through stops (11e, 12e) of the component on the casing side (1e), whereby these stops (11e, 12e) are positioned axially at a distance, and **in that** the component (2e) which can be displaced thereto is held in its functional position by means of an anti-loss mechanism formed from stops (15e, 25e) oriented contrary to the assembly direction.

13. A device according to Claim 12, **characterised in that** the stop (15e) of the component (1e) is positioned on the inner side of the flexible area (10e) carrying the friction locking component (11e).

14. A device according to one of the preceding Claims 1 to 4, **characterised in that** the friction locking components are formed as a socket-switch connection, whereby the friction locking components (11g) of one component (1g) are brought to engage with the friction locking components (24g) of the other component (2g) through a radially oriented assembly movement.

15. A device according to one of the preceding Claims 1 to 4, **characterised in that** one component (1h) consists of shell-like components, in particular half-shell-like components, which enclose the other component (2h) as far as possible.

16. A device according to Claim 15, **characterised in that** the neighbouring shell-like components consist of synthetic materials and are connected with each other through film joints (15h).

## Revendications

1. Dispositif permettant d'assurer un mouvement relatif entre une partie côté boîtier et une partie montée directement ou indirectement sur celle-ci, sur laquelle prend appui un câble Bowden d'un lève-vitre à câble, les deux parties déplaçables l'une par rapport à l'autre et reliées l'une à l'autre par des éléments à coopération de formes (11a à 11h, 23d, 23f, 24a à 24c, 24g, 24h) étant pressées au moyen d'un ressort (3) précontraint contre des butées réciproquement associées, la liaison des éléments à coopération de formes (11a à 11h, 23d, 23f, 24a à 24c, 24g, 24h) étant assurée une fois le montage terminé par le ressort (3) précontraint, à l'encontre d'un détachement inopiné, **caractérisé en ce que** les éléments à coopération de formes (11a à 11h, 23d, 23f, 24a à 24c, 24g, 24h) ou les régions flexibles (10a, 10c, 10h) reliées à ceux-ci sont entouré(e)s au moins partiellement par le ressort (3).

2. Dispositif selon la revendication 1, **caractérisé en ce que** les éléments à coopération de formes (11b, 24b ; 23d ; 11f, 23f) sont agencés entre les deux appuis terminaux (12b, 21b ; 12d, 21d ; 12f, 21f) du ressort (3) de telle sorte que ceux-ci sont entièrement entourés par le ressort (3).

3. Dispositif selon l'une des revendications précédentes, **caractérisé en ce que** la partie côté boîtier fait partie intégrante d'un boîtier de mécanisme ou d'un renvoi de câble.

4. Dispositif selon l'une des revendications précédentes, **caractérisé en ce que** les éléments à coopération de formes (24a à 24c, 24g, 24h) de la partie côté câble Bowden (2a à 2c, 2g, 2h) font partie d'une douille de guidage soutenant la gaine Bowden.

5. Dispositif selon l'une des revendications précédentes, **caractérisé en ce que** les éléments à coopération de formes (11a à 11h, 23d, 23f, 24a à 24c) sont réalisés sous forme de liaison par clips qui peuvent être amenés en engagement mutuel par un déplacement axial des régions flexibles (10a à 10f, 22d) qui présentent les éléments à coopération de formes.

6. Dispositif selon l'une des revendications précédentes, **caractérisé par** un adaptateur (14d, 14f) de la partie côté boîtier (1d à 1f) pour sa liaison avec une partie associée solidaire de la carrosserie, en particulier avec un boîtier de mécanisme ou un renvoi de câble.

7. Dispositif selon l'une des revendications précédentes, **caractérisé en ce que** les éléments à coopération de formes (24a à 24c, 24h, 23f) de ladite une partie (2a à 2c, 2f, 2h) sont réalisés sensiblement rigides et les éléments à coopération de formes (11a à 11c, 11f, 11h) de ladite autre partie (1a à 1c, 1f, 1h) sont montés de manière élastique.

8. Dispositif selon la revendication 7, **caractérisé en ce que** les éléments à coopération de formes (23f) de ladite une partie (2f) sont réalisés sensiblement rigides et **en ce que** les éléments à coopération de formes (11f) associés de l'autre partie (1f) sont réalisés sur des évidements (11'f) dans un tronçon (10f) tubulaire dont la paroi est élastiquement déformée lorsqu'on introduit les éléments à coopération de formes (23f) sensiblement rigides.

9. Dispositif selon l'une des revendications précédentes 1 à 6, **caractérisé en ce que** les éléments à coopération de formes (10d, 11d, 22d, 23d) des deux parties (1d, 2d) sont montés de manière élastique.

10. Dispositif selon la revendication 6 et la revendication 9, **caractérisé en ce que** la partie (1d) présente avec les éléments à coopération de formes (11d) situés à l'intérieur un canal axial dans lequel on peut insérer un élément de blocage (55d) pour maintenir la coopération de formes avec les éléments à coopération de formes (23d).

11. Dispositif selon la revendication 10, **caractérisé en ce que** le tube de guidage (55d) de la douille de guidage (5d) fait fonction d'élément de blocage.

12. Dispositif selon la revendication 1, **caractérisé en ce que** la précontrainte du ressort (3) dans un dispositif non chargé est assistée exclusivement par des butées (11e, 12e) espacées axialement, de la partie (1e) côté boîtier, et **en ce que** la partie (2e) déplaçable par rapport à celle-ci est maintenue dans sa position fonctionnelle au moyen d'une protection anti-perte réalisée sous forme de butées (15e, 25e) orientées à l'encontre de la direction de montage.

13. Dispositif selon la revendication 12, **caractérisé en ce que** la butée (15e) de la partie (1e) est agencée sur la face intérieure de la région (10e) flexible portant l'élément à coopération de formes (11e).

14. Dispositif selon l'une des revendications précédentes 1 à 4, **caractérisé en ce que** les éléments à coopération de formes sont réalisés sous forme de liaison à enfichage, les éléments à coopération de formes (11g) de ladite une partie (1g) étant amenés en engagement avec les éléments à coopération de formes (24g) de l'autre partie (2g) par un mouvement de montage orienté radialement.

15. Dispositif selon l'une des revendications précédentes 1 à 4, **caractérisé en ce que** ladite une partie (1h) est constituée par des éléments réalisés en forme de coque, en particulier en forme de demi-coque, qui entourent amplement l'autre partie (2h).

16. Dispositif selon la revendication 15, **caractérisé en ce que** les éléments voisins réalisés sous forme de coque sont en matière plastique et sont reliés les uns aux autres par des charnières à film (15h).
